# EUROPEAN PATENT SPECIFICATION

(11) **EP 3 262 468 B1**
(45) Date of publication and mention of the grant of the patent: **13.04.2022**
(21) Application number: 16709828.4
(22) Date of filing: 23.02.2016
(51) Int. Cl.: G03G 21/18

(54) **CARTRIDGE, PROCESS CARTRIDGE, AND IMAGE FORMING APPARATUS**
KARTUSCHE, PROZESSKARTUSCHE UND BILDERZEUGUNGSVORRICHTUNG
CARTOUCHE, CARTOUCHE DE TRAITEMENT ET APPAREIL DE FORMATION D'IMAGE

(30) Priority: 27.02.2015 JP 2015037953
(43) Date of publication of application: 03.01.2018
(73) Proprietor: Canon Kabushiki Kaisha, Tokyo 146-8501 (JP)
(72) Inventor: TAKEUCHI, Toshiaki, Tokyo 146-8501 (JP); UENO, Takahito, Tokyo 146-8501 (JP); NAKAMURA, Yuuki, Tokyo 146-8501 (JP); SUZUKI, Kensuke, Tokyo 146-8501 (JP)
(74) Representative: TBK
(86) International application number: PCT/JP2016/000957
(87) International publication number: WO 2016/136241

(56) References cited:
- EP-A1- 1 653 299
- US-A1- 2004 081 483

## Description

### [Technical Field]

The present invention relates to an image forming apparatus using an electrophotographic system.

### Description of the Related Art

### [Background Art]

As image forming apparatuses such as a printer which form an image on a recording material using an electrophotographic image forming system (an electrophotographic process), there are image forming apparatuses in which a part of components involved in an image forming process is integrated as a process cartridge and configured to be attachable to and detachable from an apparatus main body (Japanese Patent JP 5 067 913 B2 and Japanese Patent Application Laid-open JP 2012 - 234 200 A). Examples of components made into a process cartridge include an electrophotographic photosensitive drum (hereinafter, a photosensitive body), charging means, developing means, and cleaning means. In addition, a process cartridge may sometimes be configured divided into a plurality of units such as a cleaning unit (a cleaning apparatus) including a photosensitive body and cleaning means, a developing unit including developing means, and a toner unit that supplies a developer.

A configuration in which such units or such a process cartridge is attached to and detached from an apparatus main body requires means for positioning the units or the like with respect to the apparatus main body. For example, a configuration is known in which a restricted portion that engages with a restricting portion provided on an apparatus main body is provided on a frame body of a unit or the like so as to restrict displacement in a guiding direction during mounting or at a mounting position (Japanese Patent JP 5 067 913 B2 and Japanese Patent Application Laid-open JP 2012 - 234 200 A). Meanwhile, with image formation, a surface of a photosensitive body after being charged is exposed by laser light to form an electrostatic image, and the electrostatic image is developed using a developer (toner) to be visually actualized as a developer image. Since exposing means for forming the electrostatic image is provided on an apparatus main body, the unit described above or the like must be configured not to obstruct an optical path of laser light that exposes the photosensitive body. In addition, an image forming apparatus that forms an image constituted by a plurality of colors such as a color printer is configured so that a plurality of process cartridges are arranged side by side in an apparatus main body. EP 1 653 299 A1 discloses a cartridge according to the preamble of claim 1.

### [Summary of Invention]

### [Technical Problem]

The following problems exist when a plurality of process cartridges are arranged side by side in a configuration in which laser light enters through a gap between a cleaning unit and a developing unit and exposes a photosensitive body.

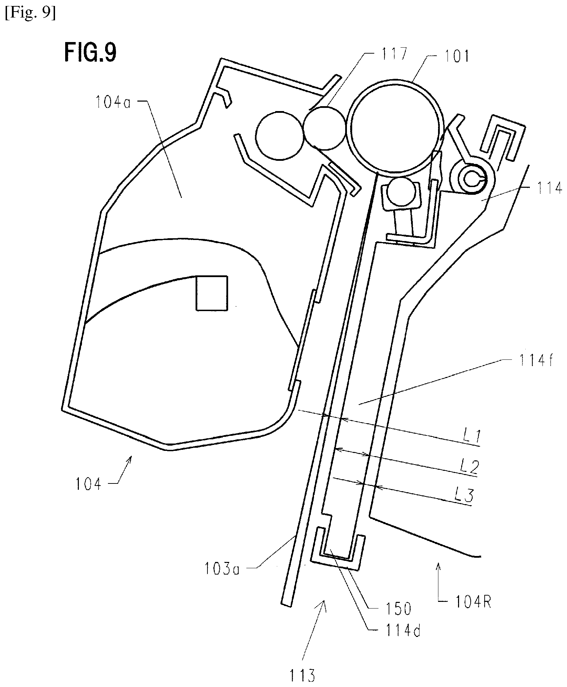

For example, in a process cartridge shown in Fig. 9, a cleaning unit 113 is provided with a photosensitive drum 101 and a developing unit 104 is provided with a developing roller 117 and a developer housing chamber 104a. In addition, a guided portion 114d is provided on a cleaning frame body 114. The guided portion 114d has a protruded shape that extends in an axial direction of the photosensitive drum 101. The guided portion 114d engages with a recessed guide 150 provided on an apparatus main body when mounting the process cartridge to the main body to restrict contact movement in a vertically downward direction and in a horizontal direction.

At this point, laser light 103a enters through a gap between the cleaning unit 113 and the developing unit 104 and is irradiated onto the photosensitive drum 101. The laser light 103a and the cleaning unit 113 are arranged with a gap L1 provided therebetween. The gap L1 is set so that the laser light is not blocked even when dimension of parts vary and even when the parts are deformed. In addition, a wall 114f with a thickness L2 is provided on a side of the cleaning unit 113 with respect to the laser light 103a. Furthermore, the wall 114f and a developing unit 104R of an adjacent process cartridge are arranged with a gap L3 provided therebetween. The gap L3 is set so as not to be closed even when dimension of parts vary, the parts are deformed, or the developing unit 104 moves relative to the cleaning unit 113 as explained later.

In this case, in order to provide process cartridges with an increased toner capacity to be housed in the developer housing chamber 104a of the developing unit 104, either a distance between adjacent process cartridges or a height of the process cartridges must be increased. As a result, an overall size of the apparatus may increase. In recent years, there have been demands for extending product life of process cartridges for the purpose of reducing a replacement frequency of the process cartridges and, accordingly, there is a need for increasing toner capacity. On the other hand, there have been demands for reducing an apparatus installation space and reducing cost of an image forming apparatus. Accordingly, there is a need for downsizing the apparatus.

An object of the present invention is to provide a technique that enables downsizing of an image forming apparatus.

### [Solution to Problem]

The object is solved by a cartridge according to claim 1. Claims 2 to 11 provide further advantageous embodiments.

The object is also solved by a process cartridge according to claim 12. Claim 13 provides a further advantageous embodiment.

Moreover, the object is also solved by an image forming apparatus according to claim 14.

Further features of the present invention will become apparent from the following description of exemplary embodiments with reference to the attached drawings.

### [Brief Description of Drawings]

[Fig. 1]

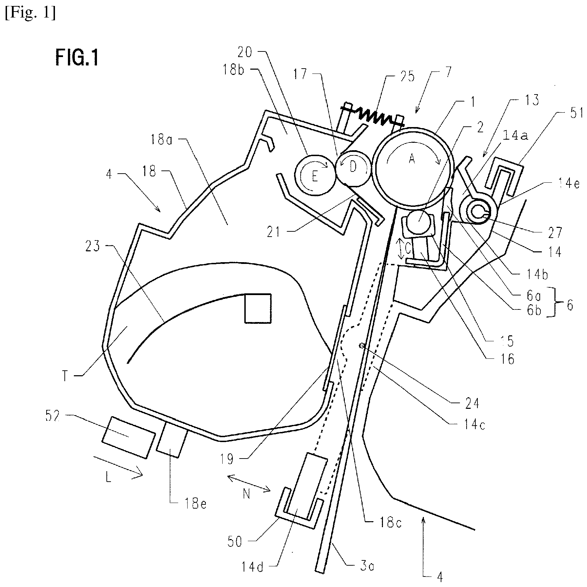

   Fig. 1 is a schematic sectional view showing a process cartridge and a main body according to a present embodiment;
[Fig. 2]

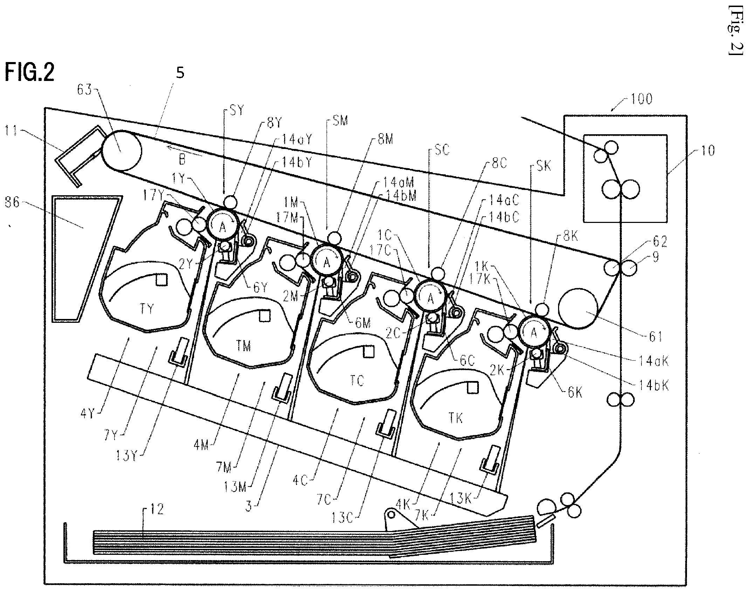

   Fig. 2 is a schematic sectional view showing an electrophotographic image forming apparatus according to the present embodiment;
[Fig. 3]

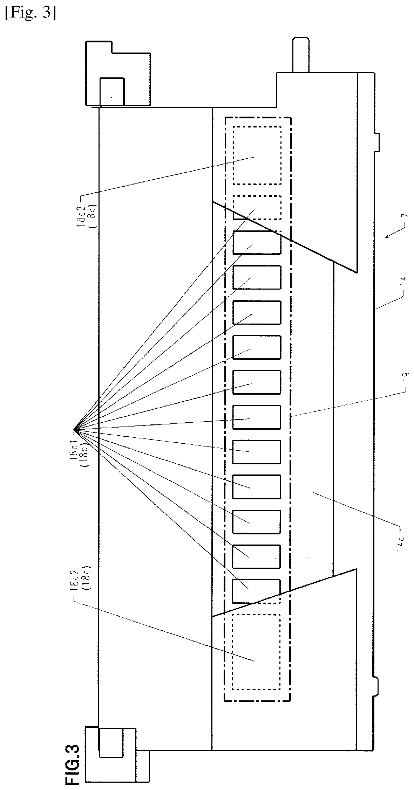

   Fig. 3 is a side view showing a process cartridge according to the present embodiment;
[Fig. 4]

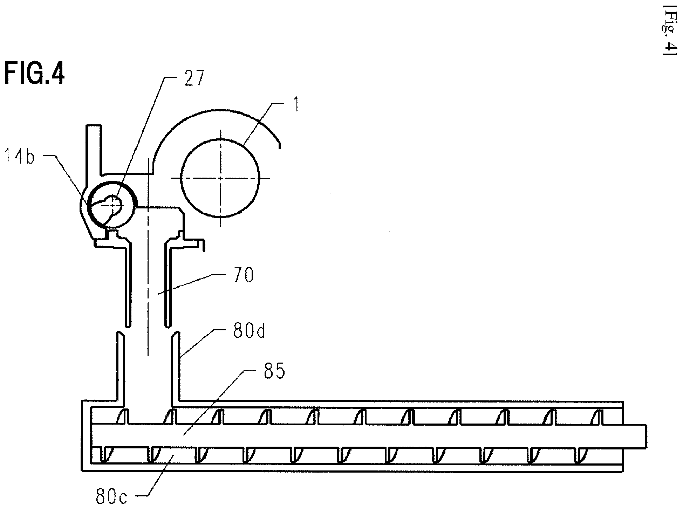

   Fig. 4 is a schematic sectional view showing a process cartridge and a main body conveying portion according to a present embodiment;
[Fig. 5]

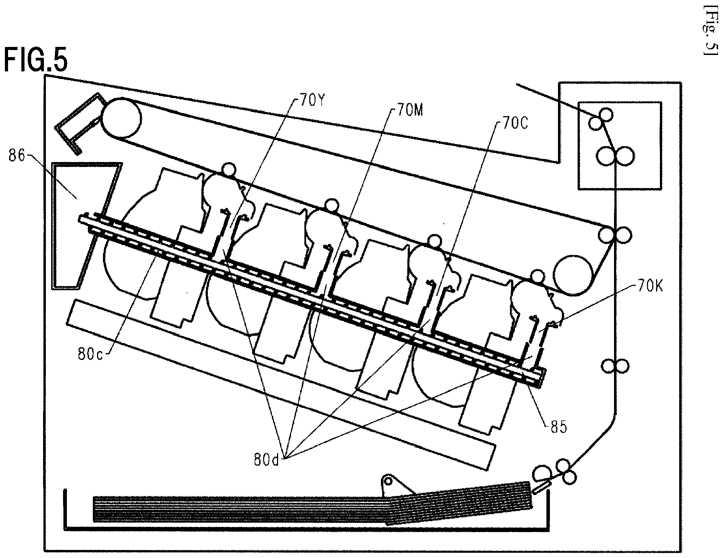

   Fig. 5 is a schematic sectional view showing a process cartridge and a main body conveying portion according to a present embodiment;
[Fig. 6]

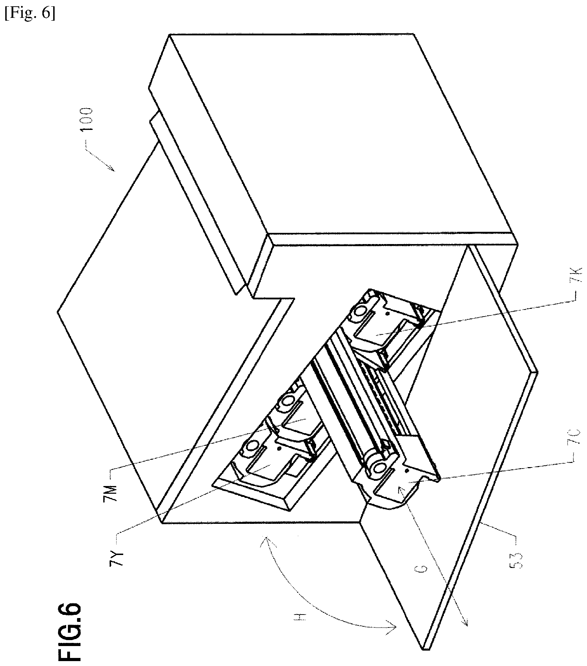

   Fig. 6 is a perspective view showing a process cartridge and a configuration for attaching and detaching a process cartridge to and from a main body according to a present embodiment;
[Fig. 7]

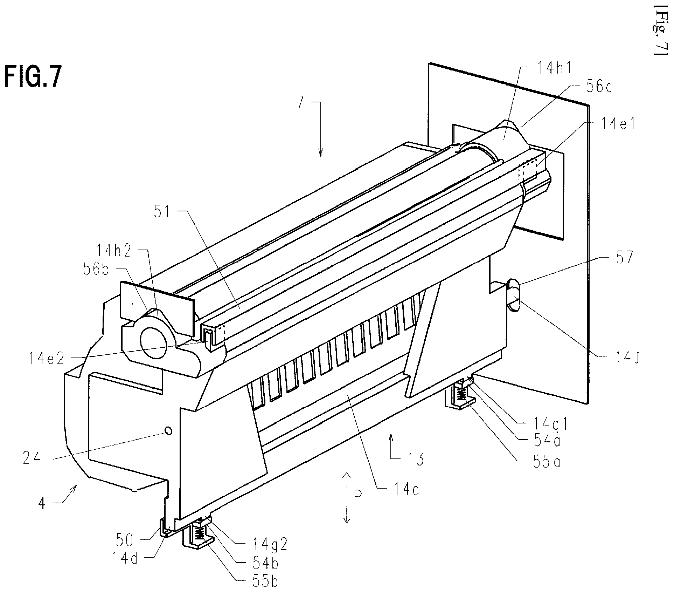

   Fig. 7 is a schematic perspective view showing a process cartridge and a configuration for positioning a process cartridge with respect to a main body according to a present embodiment;
[Fig. 8]

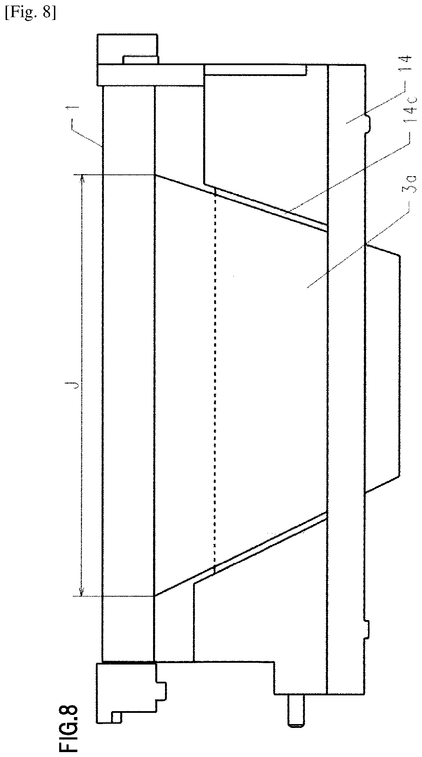

   Fig. 8 is a schematic side view showing a process cartridge according to the present embodiment; and
[Fig. 9]
   Fig. 9 is a schematic sectional view showing a process cartridge and a main body for explaining a conventional example .

### [Description of Embodiments]

Modes for implementing the present invention will now be exemplarily described in detail based on embodiments with reference to the drawings. It is to be understood that dimensions, materials, shapes, relative arrangements, and the like of components described in the embodiments are intended to be changed as deemed appropriate in accordance with configurations and various conditions of apparatuses to which the present invention is to be applied. In other words, the scope of the present invention is not intended to be limited to the embodiments described below.

### <Embodiments>

### (Electrophotographic image forming apparatus)

An overall configuration of an embodiment of an electrophotographic image forming apparatus (hereinafter, also simply referred to as an "image forming apparatus") according to the present invention will be described with reference to Fig. 2. Fig. 2 is a schematic sectional view of an image forming apparatus 100 according to an embodiment of the present invention. In this case, an electrophotographic image forming apparatus refers to an apparatus that forms an image on a recording material (recording medium) using an electrophotographic image forming system. Examples of an image forming apparatus include a copier, a printer (such as a laser beam printer or an LED printer), a facsimile device, a word processor, or a multifunctional machine (a multifunctional printer) that combines these devices. Examples of a recording material include recording paper and a plastic sheet.

As a plurality of image forming portions, the image forming apparatus 100 includes first, second, third, and fourth image forming portions SY, SM, SC, and SK for respectively forming images of the colors of yellow (Y), magenta (M), cyan (C), and black (K) . In the present embodiment, configurations and operations of the first to fourth image forming portions are substantially the same with the exception of differences in colors of the formed images. Therefore, unless the image forming portions must be distinguished from one another, Y, M, C, and K will be omitted and the image forming portions will be collectively described. In other words, in the present embodiment, the image forming apparatus 100 includes photosensitive drums (or photosensitive body) 1 (1Y, 1M, 1C, and 1K) as four image bearing members. The photosensitive drum 1 rotates in a direction of an arrow A in Fig. 2, and a charging rollers 2 and a scanner unit (an exposing apparatus) 3 are arranged around the photosensitive drum 1.

In this case, the charging rollers 2 (2Y, 2M, 2C, and 2K) are charging means that uniformly charge a surface of the photosensitive drum 1. In addition, the scanner unit 3 is exposing means which irradiates a laser based on image information and forms an electrostatic image (an electrostatic latent image) on the photosensitive drum 1. Developing assemblies (hereinafter, developing units) 4 (4Y, 4M, 4C, and 4K) and cleaning blades 6 (6Y, 6M, 6C, and 6K) as cleaning means are arranged in a periphery of the photosensitive drums 1. Furthermore, an intermediate transfer belt 5 as an intermediate transfer member for transferring a toner image on the photosensitive drum 1 to a recording material 12 is arranged so as to oppose the four photosensitive drums 1. In addition, the developing units 4 use non-magnetic single component toners or, in other words, toners T (TY, TM, TC, and TK) as developers. In the present embodiment, the developing units 4 perform contact development by bringing developing rollers 17 (7Y, 7M, 7C, and 7K) as developer bearing members into contact with the photosensitive drum 1. The cleaning units 13 (13Y, 13M, 13C, and 13K) include the photosensitive drums 1, the charging rollers 2, and the cleaning blades 6. In addition, the cleaning unit 13 include removed developer housing portions (hereinafter, referred to as removed toner housing portions) 14a (14aY, 14aM, 14aC, and 14aK) which house untransferred toner (removed toner) that remains on the photosensitive drums 1.

The process cartridge 7 is configured such that the developing unit 4 (developing cartridge) and the cleaning unit 13 (cleaning apparatus) are organized into an integrated cartridge. The image forming apparatus 100 according to the present embodiment is configured such that a plurality of the process cartridges 7 constituted by the developing units 4 and the cleaning units 12 are attachable to and detachable from the image forming apparatus 100. The process cartridge 7 is configured to be attachable to and detachable from the image forming apparatus 100 via mounting means such as a mounting guide or a positioning member (not shown) provided on the image forming apparatus 100. In other words, in the present embodiment, elements constituting the image forming apparatus 100 with the exception of elements constituting the process cartridge 7 constitute an apparatus main body. The process cartridges 7 for the respective colors all have the same shape. The process cartridges 7 for the respective colors house toners T (TY, TM, TC, and TK) of the respective colors of yellow (Y), magenta (M), cyan (C), and black (K).

The intermediate transfer belt 5 is in contact with all photosensitive drums 1 and rotates in a direction of an arrow B in Fig. 2. The intermediate transfer belt 5 is stretched over a plurality of supporting members (a driver roller 61, a secondary transfer opposing roller 62, and a driven roller 63) . Four primary transfer rollers 8 (8Y, 8M, 8C, and 8K) as primary transfer means are arranged side by side on a side of an inner peripheral surface of the intermediate transfer belt 5 so as to oppose the respective photosensitive drums 1. A secondary transfer roller 9 as secondary transfer means is arranged at a position opposing the secondary transfer opposing roller 62 on a side of an outer peripheral surface of the intermediate transfer belt 5.

### (Image forming process)

During image formation, first, the surface of the photosensitive drum 1 is uniformly charged by the charging roller 2. Next, due to laser light in accordance with image information transmitted from the scanner unit 3, the charged surface of the photosensitive drum 1 is subjected to scanning exposure and an electrostatic latent image in accordance with the image information is formed on the photosensitive drum 1. The electrostatic latent image formed on the photosensitive drum 1 is developed by the developing unit 4 as a toner image. The toner image formed on the photosensitive drum 1 is transferred (primarily transferred) onto the intermediate transfer belt 5 by an action of the primary transfer roller 8.

For example, when forming a full-color image, the process described above is sequentially performed by the first to fourth image forming portions SY, SM, SC, and SK, and toner images of the respective colors are primarily transferred onto the intermediate transfer belt 5 by being sequentially superimposed on one another. Subsequently, the recording material 12 is conveyed to the secondary transfer portion in synchronization with a movement of the intermediate transfer belt 5. In addition, due to an action of the secondary transfer roller 9 in contact with the intermediate transfer belt 5 via the recording material 12, the four-color toner image on the intermediate transfer belt 5 is collectively secondarily transferred onto the recording material 12. The recording material 12 onto which the toner image has been transferred is conveyed to a fixing apparatus 10 as fixing means. Heat and pressure are applied to the recording material 12 at the fixing apparatus 10 to fix the toner image onto the recording material 12.

Primary transfer residual toner that remains on the photosensitive drum 1 after the primary transfer process is removed by the cleaning blade 6. In addition, secondary transfer residual toner that remains on the intermediate transfer belt 5 after the secondary transfer process is removed by an intermediate transfer belt cleaning apparatus 11. The removed transfer residual toner (removed toner) is discharged to a removed toner box 86 of the image forming apparatus 100. A method of conveying removed toner will be described later.

The image forming apparatus 100 is also configured to form a single-color image or a multi-color image using only a single or some (not all) desired image forming portions.

### (Process cartridge)

An overall configuration of the process cartridge 7 to be mounted to the image forming apparatus 100 according to the present embodiment will now be described with reference to Figs . 1 and 3. Fig. 1 is a schematic sectional view showing a process cartridge and a part of an apparatus main body. Fig. 3 is a side view showing a process cartridge.

As shown in Fig. 1, the developing unit 4 includes a developing frame body 18 that supports the various elements in the developing unit 4. The developing unit 4 is provided with a developing roller 17 as a developer bearing member which bears toner (developer) and which comes into contact with the photosensitive drum 1 and rotates in a direction of an arrow D in Fig. 1 (a counterclockwise direction). The developing roller 17 is rotatably supported at both ends in a longitudinal direction thereof (a direction of a rotational axis thereof) by the developing frame body 18 via bearings. In addition, the developing frame body 18 (the developer housing portion) includes a developer storage chamber (hereinafter, a toner housing chamber) 18a (housing chamber) and a developing chamber 18b in which the developing roller 17 is arranged. A toner supplying roller 20 as a developer supplying member which comes into contact with the developing roller 17 and rotates in a direction of an arrow E and a developing blade 21 as a developer restricting member for restricting a toner layer of the developing roller 17 are arranged in the developing chamber 18b. Furthermore, a stirring member 23 for stirring toner T housed in the toner storage chamber 18a of the developing frame body 18 and for conveying the toner to the toner supplying roller 20 is provided in the toner storage chamber 18a.

A vent hole 18c for preventing a rise in internal pressure of the toner housing chamber 18a or for degassing during toner injection is provided on an outer wall on a side of the cleaning unit 13 of a wall portion of the developing frame body 18 which constitutes the toner housing chamber 18a. A ventilation member (filter) 19 is provided so as to block the vent hole 18c. The ventilation member 19 prevents passage of the toner T but allows passage of air. The ventilation member 19 is bonded to the developing frame body 18 by adhesion, welding, insert molding, or the like. By configuring a periphery of the vent hole 18c as a flat surface, bonding of the ventilation member 19 to the developing frame body 18 can be readily performed and adhesiveness with a degassing apparatus (not shown) can be improved when degassing is performed during toner injection.

As shown in Fig. 3, the vent hole 18c is arranged in plurality in a longitudinal direction. A single rectangular ventilation member 19 is provided with respect to the plurality of vent holes 18c so as to block all of the vent holes 18c. An opening 14c that is a through hole is provided on the cleaning unit 13 as will be described later. The vent hole 18c has a rectangular shape and is provided in plurality. When viewed from a side of the cleaning unit 13, an area of the hole is small in a region overlapping (exposed to an exterior) the opening 14c (18c1) and is large in a region not overlapping the opening 14c (18c2). Accordingly, ventilation performance can be improved while securing a large vent hole area as possible and, at the same time, separation of the ventilation member 19 due to being touched by a user during handling can be prevented. While the vent hole 18c is given a rectangular shape and is provided in plurality in the present embodiment, the vent hole 18c may have any shape and only one vent hole 18c may be provided. Moreover, the present invention can also be applied to a configuration in which the ventilation member 19 and the vent hole 18c are not provided.

As shown in Fig. 1, the developing unit 4 is coupled to the cleaning unit 13 so as to be rotationally movable around a fitting shaft 24 that is fixed to and supported by a cleaning frame body 14. In addition, the developing unit 4 is biased by a pressure spring (tension spring) 25. Therefore, during image formation by the process cartridge 7, the developing unit 4 rotates around the fitting shaft 24 and the photosensitive drum 1 and the developing roller 17 come into contact with each other. Furthermore, a pressed portion 18e is provided on the developing unit 4. A separation lever 52 is provided on the apparatus main body. When image formation is not being performed, as the main body separation lever 52 presses the pressed portion 18e and moves in a direction of an arrow L, the developing unit 4 rotates around the fitting shaft 24 and the photosensitive drum 1 and the developing roller 17 separate from each other. While the developing unit 4 is configured to be rotatable with respect to the cleaning unit 13 in the present embodiment, this configuration is not restrictive and the present invention can also be applied to a configuration in which the developing unit 4 slides or to a configuration in which the developing unit 4 does not move.

### (Cleaning unit)

The cleaning unit 13 includes the cleaning frame body 14 as a frame body that supports the various elements in the cleaning unit 13. The cleaning frame body 14 is attached (supported) via a bearing member so that the photosensitive drum 1 is rotatable in a direction of an arrow A shown in Fig. 1. In addition, a charging roller bearing 15 is attached to the cleaning frame body 14 along a line that passes through a center of rotation of the charging roller 2 (charging member) and a center of rotation of the photosensitive drum 1. In this case, the charging roller bearing 15 is attached so as to be movable in a direction of an arrow C shown in Fig. 1. The charging roller 2 is rotatably attached to the charging roller bearing 15. In addition, the charging roller bearing 15 is biased toward the photosensitive drum 1 by a charging roller pressure spring 16 as biasing means. Furthermore, the cleaning blade 6 is integrally formed by an elastic member 6a for removing transfer residual toner (removed toner) that remains on the surface of the photosensitive drum 1 after primary transfer and a supporting member 6b for supporting the elastic member. Removed toner as a removed object having been removed from the surface of the photosensitive drum 1 by the cleaning blade 6 drops in a direction of gravity (vertical direction) in a space formed by the cleaning blade 6 and the cleaning frame body 14 and is housed in the removed toner housing portion 14a. The removed toner housing portion 14a is provided with conveyance paths 14b (14bY, 14bM, 14bC, and 14bK) for conveying removed toner housed in the removed toner housing portion 14a, and a conveyance screw 27 is arranged in the conveyance paths 14b. The conveyance screw 27 is arranged such that an axial direction thereof is parallel to an axial direction of the photosensitive drum 1.

As shown in Fig. 4, a second conveyance path 70 which extends vertically with respect to a conveyance direction of the conveyance path 14b and in a direction of gravity and through which removed toner passes is arranged at a downstream-side end of the conveyance path 14b in a conveyance direction of removed toner. Fig. 4 is a diagram for explaining a configuration for collecting a removed object according to the present embodiment and is a schematic sectional view showing a toner process cartridge and a main body conveying portion. Removed toner is conveyed in an axial direction by the conveyance screw 27 (conveying member) from the removed toner housing portion 14a. The removed toner then exits the cleaning unit 13 from a discharge port of the second conveyance path 70 and is discharged to an inflow port 80d of a main body main conveyance path 80c provided in the apparatus main body. Subsequently, as shown in Fig. 5, the removed toner is conveyed to the removed toner box 86 by a main body conveyance screw 85 provided in the main body main conveyance path 80c to be housed in the removed toner box 86. Fig. 5 is a diagram for explaining a configuration for collecting a removed object according to the present embodiment and is a schematic sectional view showing a toner process cartridge and a main body conveying portion. While the present embodiment adopts a configuration in which removed toner collected by the process cartridge 7 is conveyed to the main body to be housed in the removed toner box 86, this configuration is not restrictive. For example, the present invention can also be applied to a configuration in which removed toner is conveyed to the developing unit 4 or a configuration in which removed toner is not conveyed.

### (Attachment and detachment of process cartridge)

A configuration for attaching and detaching the process cartridge 7 with respect to the apparatus main body will now be described with reference to Figs. 1, 6, and 7. Fig. 6 is a perspective view showing a process cartridge and a configuration for attaching and detaching a process cartridge to and from a main body. Fig. 7 is a schematic perspective view showing a configuration for positioning a process cartridge with respect to a main body.

As shown in Fig. 6, the process cartridge 7 is attached and detached in an axial direction (a direction of an arrow G) of the photosensitive drum 1 with respect to the main body 100. In this case, an upstream side in a mounting direction of the process cartridge 7 will be defined as a front side and a downstream side in the mounting direction of the process cartridge 7 will be defined as a rear side. In addition, as shown in Fig. 1, a first guide 50 which extends in an attaching/detaching direction and which has a recessed shape is provided on a lower side in a vertical direction of the main body 100, and a second guide 51 which has a recessed shape is provided on an upper side in a vertical direction of the main body 100. Meanwhile, as shown in Figs. 7 and 1, a first guided portion 14d (first restricted portion) which extends in an axial direction of the photosensitive drum 1 and which has a protruded shape is provided at a position corresponding to the first guide 50 (first restricting portion) on the cleaning frame body 14 of the cleaning unit 13. Furthermore, second guided portions 14e (14e1 and 14e2) which have a protruded shape are provided at both longitudinal ends of a position corresponding to the second guide 51 (second restricting portion) of the cleaning frame body 14. Moreover, in Fig. 7, the first guide 50 is shown with a part of a structure thereof removed in order to present a structure of the first guided portion 14d in an easily understandable manner. As contact of the first guided portion 14d and the second guided portions 14e1 and 14e2 with respect to the first guide 50 and the second guide 51 is respectively restricted, postures of the process cartridge 7 in a vertical direction and a horizontal direction during attaching and detaching are restricted. In other words, the first guided portion 14d and the second guided portions 14e are restricted by the first guide 50 and the second guide 51 so that movement in a movement direction of the process cartridge 7 is allowed but movement in directions other than the movement direction is restricted during attachment to and detachment from the apparatus main body.

While the first guide 50 and the second guide 51 are given recessed shapes and the first guided portion 14d and the second guided portions 14e1 and 14e2 are given protruded shapes in the present embodiment, this configuration is not restrictive. For example, the first guide 50 and the second guide 51 may be given protruded shapes and the first guided portion 14d and the second guided portions 14e1 and 14e2 may be given recessed shapes. In addition, while the first guided portion 14d is configured to extend along the entire attaching/detaching direction, this configuration is not restrictive. For example, the first guided portion 14d may be configured to extend only at both longitudinal ends or may be configured to extend at only one location in the longitudinal direction. In a similar manner, while the second guided portions 14e1 and 14e2 are configured to extend only at both longitudinal ends along the entire attaching/detaching direction, this configuration is not restrictive. For example, the second guided portions 14e1 and 14e2 may be configured to extend along the entire attaching/detaching direction or may be configured to extend at only one location in the longitudinal direction.

In addition, the separation lever 52 described earlier is provided on the main body 100 (refer to Fig. 1). In a state where the process cartridge 7 is mounted to the main body 100, the separation lever 52 is biased in a direction of an arrow L and is at a separation position that causes the photosensitive drum 1 and the developing roller 17 to be separated from each other. On the other hand, the process cartridge 7 is in a contact state where the photosensitive drum 1 and the developing roller 17 are in contact with each other in a state prior to mounting. As described above, during a mounting process of the process cartridge 7, the separation lever 52 and the pressed portion 18e provided on the developing unit 4 come into contact with each other and the pressed portion 18e is separated by the separation lever 52. In addition, the developing unit 4 rotates around the fitting shaft 24 with respect to the cleaning unit 13 to cause the photosensitive drum 1 and the developing roller 17 to separate from each other in a state where mounting has been completed and to release biasing of the separation lever 52 and cause the photosensitive drum 1 and the developing roller 17 to come into contact with each other during image formation. The developing unit 4 moves with respect to the cleaning unit 13 during an attaching/detaching process. Therefore, by providing a guided section during attachment and detachment of the process cartridge 7 on the cleaning unit 13 instead of on the developing unit 4, the posture of the process cartridge 7 during attachment and detachment stabilizes and operability improves.

### (Positioning of process cartridge)

Next, a configuration for positioning the process cartridge 7 will now be described with reference to Figs. 6 and 7. The first guide 50 provided on the apparatus main body is configured to move in an up/down direction (a direction of an arrow P in Fig. 7) in conjunction with an opening/closing operation (a direction of an arrow H in Fig. 6) of a main body door 53. The first guide 50 is moved to a lower position in an opened state of the main body door 53 and moved to an upper position in a closed state of the main body door 53 by a link mechanism (not shown) or the like. As shown in Fig. 7, pressing members 54a and 54b are respectively provided on a rear side and a front side of the first guide 50. The pressing members 54a and 54b are slidable in an up/down direction (the direction of the arrow P in Fig. 7) of the first guide 50 and are biased in an upward direction by biasing means 55a and 55b that are compression springs or the like. In addition, V-shaped positioning portions 56a and 56b are respectively provided on a rear side and a front side of the apparatus main body. Furthermore, a hole portion 57 which extends in a direction of upward/downward movement of the first guide 50 and which has a long, round hole shape is provided on the rear side.

Meanwhile, the process cartridge 7 is respectively provided with receiving portions 14g1 and 14g2 on a rear side and a front side of the cleaning unit 13. In addition, R-shaped restricting portions 14h1 and 14h2 are respectively provided on the rear side and the front side of the cleaning unit 13. Furthermore, a cylindrical rotation-preventing boss 14j is provided on the rear side of the cleaning unit 13. As described earlier, when the process cartridge 7 is mounted in an axial direction of the photosensitive drum 1, the rotation-preventing boss 14j of the cleaning unit 13 is fitted to the main body hole portion 57. Next, due to a closing operation of the main body door 53, the first guide 50 is moved to the upper position. At this point, the pressing members 54a and 54b press the receiving portions 14g1 and 14g2 upward due to biasing forces of the biasing means 55a and 55b. In addition, due to the restricting portions 14h1 and 14h2 of the cleaning unit 13 abutting against the positioning portions 56a and 56b of the main body 100 and the rotation-preventing boss 14j engaging with the hole portion 57, a position of the process cartridge 7 with respect to the main body 100 is determined.

### (Opening of cleaning unit)

As shown in Fig. 1, in the cleaning unit 13, between a center of the photosensitive drum 1 and the first guided portion 14d, the cleaning frame body 14 is provided with the opening 14c through which the laser light 3a for exposing the photosensitive drum 1 can pass. The opening 14c is provided in a direction in which the cleaning unit 13 and the developing unit 4 oppose each other (a direction of an arrow N in Fig. 1) .

As described earlier, due to laser light 3a in accordance with image information transmitted from the scanner unit 3, an electrostatic latent image in accordance with the image information is formed on the photosensitive drum 1. During image formation, the laser light 3a passes through the opening 14c and is irradiated on the photosensitive drum 1. In this case, the first guided portion 14d is arranged on the side of the developing unit 4 so as to straddle the laser light 3a. In other words, the cleaning frame body 14 includes a portion on a side far from the photosensitive drum 1 (a first frame body portion) and a portion on a side close to the photosensitive drum 1 (a second frame body portion) approximately across the opening 14c, and the first guided portion 14d is provided in the first frame body portion. The second guided portions 14e1 and 14e2 are provided in the second frame body portion. The cleaning frame body 14 is configured to include a portion in which the first guided portion 14d is provided, a portion in which the second guided portions 14e1 and 14e2 are provided, and a connecting portion which connects the two portions across an optical path of the laser light 3a. The first frame body portion and the second frame body portion are positioned so as to sandwich the optical path of the laser light 3a, and the first frame body portion is positioned on a same side as the developing unit 4 with respect to the optical path of the laser light 3a. In addition, the first frame body portion is positioned on an opposite side across the optical path of the laser light 3a with respect to the developing unit 4 of an adjacent process cartridge 7 (another developing cartridge).

As described above, by adopting a configuration in which the opening 14c is provided and the cleaning frame body 14 has a shape that sandwiches the optical path of the laser light 3a, a frame body dimension in a direction in which the process cartridges 7 are adjacent to each other can be reduced. In other words, a width of the process cartridge 7 in a direction in which the cleaning unit 13 and the developing unit 4 oppose each other (a direction in the arrow N in Fig. 1) can be reduced at the opening 14c and in a region where the opening 14c is separated from the center of the photosensitive drum 1. In addition, as shown in Fig. 1, by arranging a part of the developing units 4 of adjacent process cartridges 7 in the downsized region described above, necessary toner housing capacity can be secured and a distance between adjacent process cartridges 7 or a height of the developing units can be reduced. Therefore, the process cartridges 7 can be downsized and adjacent intervals of the process cartridges 7 that are adjacent to each other can be reduced. Accordingly, a reduction in mounting spaces of the plurality of process cartridges 7 in the apparatus main body can be performed and downsizing of the apparatus can be achieved.

As shown in Fig. 8, the opening 14c has a trapezoidal shape when viewed from a direction in which the cleaning unit 13 and the developing unit 4 oppose each other (the direction of the arrow N in Fig. 1) . This is a shape that enables the laser light 3a to be irradiated in a printable region J on the photosensitive drum 1. In other words, the opening 14c is configured so that the width of the opening 14c in a scanning direction in an irradiation range of the laser light 3a becomes greater gradually toward a side of the photosensitive drum 1 from a side of a light source of the laser light 3a. Accordingly, a size of the connecting portion which connects a portion on one side and a portion on the other side of the opening 14c of the cleaning frame body 14 can be secured and strength of the frame body can be secured while ensuring that the optical path of the laser light 3a is not obstructed. Moreover, while the opening 14c is given a trapezoidal shape in the present embodiment, this is not restrictive. The opening 14c may have any shape such as a rectangle as long as the opening is large enough to enable the laser light 3a to be irradiated in the printable region of the photosensitive drum 1.

In addition, as shown in Figs. 1 and 7, by providing the cleaning unit 13 with the opening 14c and arranging the first guided portion 14d on the side of the developing unit 4 across the laser light 3a, the developing unit 4 is exposed to an exterior near center in the longitudinal direction. Accordingly, only the developing unit 4 exposed to the exterior near center in the longitudinal direction can be made graspable. By making only the developing unit 4 graspable as in the case of the embodiment, rotational movements of the developing unit 4 and the cleaning unit 13 can be prevented during handling by the user. As a result, operability is improved.

As described above, according to the configuration of the present embodiment described above, by providing an opening between a center of a photosensitive drum and a guided portion of a frame body, a wall on a side of a cleaning apparatus with respect to laser light in a cross section viewed from an axial direction of the photosensitive drum is eliminated. Therefore, since a gap L1 between laser light and the wall as well as a thickness L2 of the wall itself which have conventionally been provided no longer exist, the cleaning apparatus or a process cartridge can be downsized. In addition, by arranging a part of a developing unit of an adjacent process cartridge in the region described above, a downsized image forming apparatus can be provided.

While the present invention has been described with reference to exemplary embodiments, it is to be understood that the invention is not limited to the disclosed exemplary embodiments, and the extent of protection is defined by the scope of the claims.

This application claims the benefit of Japanese Patent Application No. 2015-037953, filed February 27, 2015.

## Claims

1. A cartridge (7) attachable to and detachable from an apparatus main body of an image forming apparatus (100) that forms an image on a recording material,
the cartridge (7) comprising:
a photosensitive body (1); and
a frame body (14) which supports the photosensitive body (1) and which includes a first restricted portion (14d) that is restricted by a first restricting portion (50) provided in the apparatus main body and a second restricted portion (14e) that is provided on a side opposite to the first restricted portion (14d) across an optical path of light for exposing the photosensitive body (1) and that is restricted by a second restricting portion (51) provided in the apparatus main body,
**characterized in that**
the first restricted portion (14d) and the second restricted portion (14e) are restricted by the first restricting portion (50) and the second restricting portion (51) such that a movement of the frame body (14) in a movement direction of the cartridge (7), the movement direction is along with an axial direction of the photosensitive body (1), when being attached to or detached from the apparatus main body is allowed and a posture of the process cartridge during attaching and detaching is restricted.

2. The cartridge (7) according to claim 1, wherein the frame body (14) includes an opening (14c) through which light for exposing the photosensitive body (1) can pass.

3. The cartridge (7) according to claim 2, wherein the opening (14c) is configured such that a width of the opening (14c) in a scanning direction in an irradiation range of the light for exposing the photosensitive body (1) becomes greater toward a side of the photosensitive body (1) from a side of a light source of light for exposing the photosensitive body (1).

4. The cartridge (7) according to any one of claims 1 to 3, wherein the first restricted portion (14d) is provided at a position more separated from the photosensitive body (1) than the second restricted portion (14e).

5. The cartridge (7) according to any one of claims 1 to 4, wherein
the cartridge (7) is a cartridge (7) mounted at a position adjacent to a developing cartridge (14) provided with a developer bearing member (17) that bears a developer for developing an electrostatic image formed on the photosensitive body (1) in the apparatus main body, and
the first restricted portion (14d) is positioned on a same side as the developing cartridge (14) with respect to the optical path.

6. The cartridge (7) according to claim 5, wherein the second restricted portion (14e) is positioned on a side opposite to the developer bearing member (17) with respect to the photosensitive body (1).

7. The cartridge (7) according to claim 5 or 6, wherein
the cartridge (7) is a cartridge (7) mounted at a position adjacent to another developing cartridge (14) on a side opposite to the side adjacent to the developing cartridge (14) in the apparatus main body, and
the first restricted portion (14d) is positioned on an opposite side so as to sandwich the optical path with the other developing cartridge (14).

8. The cartridge (7) according to any one of claims 1 to 7,
wherein the frame body (14) includes a connecting portion that connects the first restricted portion (14d) and the second restricted portion (14e) with each other.

9. The cartridge (7) according to any one of claims 1 to 3, wherein the light for exposing the photosensitive body (1) is laser light.

10. The cartridge (7) according to any one of claims 1 to 9, further comprising:
a charging member (2) that charges the photosensitive body (1);
a cleaning member (13) that cleans a surface of the photosensitive body (1); and
a housing portion (14a) that houses a removed object having been removed by the cleaning member (13) from the surface of the photosensitive body (1).

11. The cartridge (7) according to claim 10, wherein the housing portion (14a) includes a discharge port for discharging the housed removed object to the outside and a conveying member (27) that conveys the removed object toward the discharge port.

12. A process cartridge that is attachable to and detachable from an apparatus main body of an image forming apparatus (100),
the process cartridge comprising:
the cartridge (7) according to any one of claims 1 to 11; and
a developing cartridge (14) provided with a developer bearing member (17) that bears a developer for developing an electrostatic image formed on the photosensitive body (1).

13. The process cartridge according to claim 12, wherein
the frame body (14) has an opening (14c) through which light for exposing the photosensitive body (1) can pass,
the developing cartridge (14) further includes a developer housing portion (18) having a housing chamber (18a) that houses a developer and a plurality of vent holes for ventilation between the inside and the outside of the housing chamber (18a), and
a hole size of the vent hole at a position opposing the frame body, (14) from among the plurality of vent holes, is larger than a hole size of the vent hole at a position exposed via the opening (14c).

14. An image forming apparatus (100) forming an image on a recording material, wherein
either the cartridge (7) according to any one of claims 1 to 11 or the process cartridge according to claim 12 or 13 is configured in plurality to be attachable to and detachable from an apparatus main body.

## Patentansprüche

1. Kartusche (7), die an einem Gerätehauptkörper eines Bilderzeugungsgeräts (100) anbringbar und davon abnehmbar ist, das ein Bild auf einem Aufnahmematerial erzeugt,
wobei die Kartusche (7) Folgendes aufweist:
einen lichtempfindlichen Körper (1); und
einen Rahmenkörper (14), welcher den lichtempfindlichen Körper (1) abstützt und welcher einen ersten beschränkten Abschnitt (14d), der durch einen ersten Beschränkungsabschnitt (50) beschränkt ist, der in dem Gerätehauptkörper vorgesehen ist, und einen zweiten beschränkten Abschnitt (14e) aufweist, der auf einer Seite vorgesehen ist, die dem ersten beschränkten Abschnitt (14d) über einen optischen Pfad von Licht zum Belichten des lichtempfindlichen Körpers (1) gegenüberliegt, und der durch einen zweiten Beschränkungsabschnitt (51) beschränkt ist, der in dem Gerätehauptkörper vorgesehen ist,
**dadurch gekennzeichnet, dass**
der erste beschränkte Abschnitt (14d) und der zweite beschränkte Abschnitt (14e) durch den ersten Beschränkungsabschnitt (50) und den zweiten Beschränkungsabschnitt (51) so beschränkt sind, dass eine Bewegung des Rahmenkörpers (14) in einer Bewegungsrichtung der Kartusche (7), wobei die Bewegungsrichtung entlang einer Axialrichtung des lichtempfindlichen Körpers (1) ist, beim Angebrachtwerden an oder Abgenommenwerden von dem Gerätehauptkörper ermöglicht ist und eine Stellung der Prozesskartusche während eines Anbringens und Abnehmens beschränkt ist.

2. Kartusche (7) nach Anspruch 1, wobei der Rahmenkörper (14) eine Öffnung (14c) aufweist, durch welche Licht zum Belichten des lichtempfindlichen Körpers (1) gehen kann.

3. Kartusche (7) nach Anspruch 2, wobei die Öffnung (14c) so konfiguriert ist, dass eine Breite der Öffnung (14c) in einer Scanrichtung in einem Bestrahlungsbereich des Lichts zum Belichten des lichtempfindlichen Körpers (1) von einer Seite einer Lichtquelle von Licht zum Belichten des lichtempfindlichen Körpers (1) zu einer Seite des lichtempfindlichen Körpers (1) größer wird.

4. Kartusche (7) nach einem der Ansprüche 1 bis 3, wobei der erste beschränkte Abschnitt (14d) an einer Position vorgesehen ist, die von dem lichtempfindlichen Körper (1) weiter getrennt ist als der zweite beschränkte Abschnitt (14e).

5. Kartusche (7) nach einem der Ansprüche 1 bis 4, wobei
die Kartusche (7) eine Kartusche (7) ist, die an einer Position montiert ist, die zu einer Entwicklerkartusche (14) benachbart ist, die mit einem Entwicklerträgerelement (17) versehen ist, das einen Entwickler zum Entwickeln eines elektrostatischen Bilds trägt, das auf dem lichtempfindlichen Körper (1) in dem Gerätehauptkörper erzeugt wird, und
der erste beschränkte Abschnitt (14d) bezüglich des optischen Pfads auf derselben Seite wie die Entwicklerkartusche (14) positioniert ist.

6. Kartusche (7) nach Anspruch 5, wobei der zweite beschränkte Abschnitt (14e) auf einer Seite positioniert ist, die dem Entwicklerträgerelement (17) bezüglich des lichtempfindlichen Körpers (1) gegenüberliegt.

7. Kartusche (7) nach Anspruch 5 oder 6, wobei
die Kartusche (7) eine Kartusche (7) ist, die in dem Gerätehauptkörper an einer Position montiert ist, die zu einer anderen Entwicklerkartusche (14) auf einer Seite benachbart ist, die der Seite gegenüberliegt, die zu der Entwicklerkartusche (14) benachbart ist, und
der erste beschränkte Abschnitt (14d) auf einer gegenüberliegenden Seite positioniert ist, um den optischen Pfad mit der anderen Entwicklerkartusche (14) zwischenzuordnen.

8. Kartusche (7) nach einem der Ansprüche 1 bis 7, wobei der Rahmenkörper (14) einen Verbindungsabschnitt aufweist, der den ersten beschränkten Abschnitt (14d) und den zweiten beschränkten Abschnitt (14e) miteinander verbindet.

9. Kartusche (7) nach einem der Ansprüche 1 bis 3, wobei das Licht zum Belichten des lichtempfindlichen Körpers (1) Laserlicht ist.

10. Kartusche (7) nach einem der Ansprüche 1 bis 9, ferner mit:
einem Ladungselement (2), das den lichtempfindlichen Körper (1) lädt;
einem Reinigungselement (13), das eine Oberfläche des lichtempfindlichen Körpers (1) reinigt; und
einem Gehäuseabschnitt (14a), der ein entferntes Objekt aufnimmt, das durch das Reinigungselement (13) von der Oberfläche des lichtempfindlichen Körpers (1) entfernt worden ist.

11. Kartusche (7) nach Anspruch 10, wobei der Gehäuseabschnitt (14a) eine Abgabeschnittstelle zum Abgeben des aufgenommenen entfernten Objekts zu der Außenseite und ein Förderelement (27) aufweist, das das entfernte Objekt zu der Abgabeschnittstelle fördert.

12. Prozesskartusche, die an einem Gerätehauptkörper eines Bilderzeugungsgeräts (100) anbringbar und davon abnehmbar ist,
wobei die Prozesskartusche Folgendes aufweist:
die Kartusche (7) nach einem der Ansprüche 1 bis 11; und
eine Entwicklerkartusche (14), die mit einem Entwicklerträgerelement (17) versehen ist, das einen Entwickler zum Entwickeln eines elektrostatischen Bilds trägt, das auf dem lichtempfindlichen Körper (1) erzeugt wird.

13. Prozesskartusche nach Anspruch 12, wobei
der Rahmenkörper (14) eine Öffnung (14c) hat, durch welche Licht zum Belichten des lichtempfindlichen Körpers (1) gehen kann,
die Entwicklerkartusche (14) ferner einen Entwicklergehäuseabschnitt (18) aufweist, der eine Gehäusekammer (18a), die einen Entwickler aufnimmt, und eine Vielzahl von Belüftungslöchern zum Belüften zwischen der Innenseite und der Außenseite der Gehäusekammer (18a) hat, und
eine Lochgröße des Belüftungslochs an einer Position, die von der Vielzahl von Belüftungslöchern dem Rahmenkörper (14) gegenüberliegt, größer ist als eine Lochgröße des Belüftungslochs an einer Position, die über die Öffnung (14c) freigelegt ist.

14. Bilderzeugungsgerät (100), das ein Bild auf einem Aufnahmematerial erzeugt, wobei
entweder die Kartusche (7) nach einem der Ansprüche 1 bis 11 oder die Prozesskartusche nach Anspruch 12 oder 13 in einer Vielzahl konfiguriert ist, um an dem Gerätehauptkörper anbringbar und davon abnehmbar zu sein.

## Revendications

1. Cartouche (7) pouvant être montée sur un corps principal d'appareil d'un appareil de formation d'image (100), et en être démontée, qui forme une image sur un matériau d'enregistrement,
la cartouche (7) comprenant :
un corps photosensible (1) ; et
un corps de bâti (14) qui supporte le corps photosensible (1) et qui comprend une première partie limitée (14d) qui est limitée par une première partie de limitation (50) disposée dans le corps principal d'appareil et une seconde partie limitée (14e) qui est disposée d'un côté opposé à la première partie limitée (14d) de part et d'autre d'un trajet optique de lumière destinée à exposer le corps photosensible (1) et qui est limitée par une seconde partie de limitation (51) disposée dans le corps principal d'appareil,
**caractérisée en ce que**
la première partie limitée (14d) et la seconde partie limitée (14e) sont limitées par la première partie de limitation (50) et la seconde partie de limitation (51) de façon à autoriser un déplacement du corps de bâti (14) dans une direction de déplacement de la cartouche (7), la direction de déplacement correspondant à une direction axiale du corps photosensible (1), lors de son montage ou de son démontage du corps principal d'appareil, et à limiter une posture de la cartouche de traitement pendant le montage et le démontage.

2. Cartouche (7) selon la revendication 1, dans laquelle le corps de bâti (14) comprend une ouverture (14c) à travers laquelle peut passer de la lumière destinée à exposer le corps photosensible (1).

3. Cartouche (7) selon la revendication 2, dans laquelle l'ouverture (14c) est configurée de sorte qu'une largeur de l'ouverture (14c) dans une direction de balayage dans une plage d'exposition à un rayonnement de la lumière destinée à exposer le corps photosensible (1) augmente en direction d'un côté du corps photosensible (1) à partir d'un côté d'une source de lumière de lumière destinée à exposer le corps photosensible (1).

4. Cartouche (7) selon l'une quelconque des revendications 1 à 3, dans laquelle la première partie limitée (14d) est disposée au niveau d'une position plus éloignée du corps photosensible (1) que la seconde partie limitée (14e).

5. Cartouche (7) selon l'une quelconque des revendications 1 à 4, où
la cartouche (7) est une cartouche (7) montée à une position adjacente à une cartouche de développement (14) dotée d'un élément porteur de développateur (17) qui porte un développateur destiné à développer une image électrostatique formée sur le corps photosensible (1) dans le corps principal d'appareil, et
la première partie limitée (14d) est positionnée d'un même côté que la cartouche de développement (14) par rapport au trajet optique.

6. Cartouche (7) selon la revendication 5, dans laquelle la seconde partie limitée (14e) est positionnée d'un côté opposé à l'élément porteur de développateur (17) par rapport au corps photosensible (1).

7. Cartouche (7) selon la revendication 5 ou 6, où
la cartouche (7) est une cartouche (7) montée à une position adjacente à une autre cartouche de développement (14) d'un côté opposé au côté adjacent à la cartouche de développement (14) dans le corps principal d'appareil, et
la première partie limitée (14d) est positionnée d'un côté opposé de façon à prendre en sandwich le trajet optique avec l'autre cartouche de développement (14).

8. Cartouche (7) selon l'une quelconque des revendications 1 à 7,
dans laquelle le corps de bâti (14) comprend une partie de liaison qui relie l'une à l'autre la première partie limitée (14d) et la seconde partie limitée (14e).

9. Cartouche (7) selon l'une quelconque des revendications 1 à 3, dans laquelle la lumière destinée à exposer le corps photosensible (1) est une lumière laser.

10. Cartouche (7) selon l'une quelconque des revendications 1 à 9, comprenant en outre :
un élément de charge (2) qui charge le corps photosensible (1) ;
un élément de nettoyage (13) qui nettoie une surface du corps photosensible (1) ; et
une partie de logement (14a) qui loge un objet retiré ayant été retiré par l'élément de nettoyage (13) de la surface du corps photosensible (1).

11. Cartouche (7) selon la revendication 10, dans laquelle la partie de logement (14a) comprend un orifice de décharge destiné à décharger l'objet retiré logé vers l'extérieur et un élément de transport (27) qui transporte l'objet retiré en direction de l'orifice de décharge.

12. Cartouche de traitement qui peut être montée sur un corps principal d'appareil d'un appareil de formation d'image (100), et en être démontée,
la cartouche de traitement comprenant :
la cartouche (7) selon l'une quelconque des revendications 1 à 11 ; et
une cartouche de développement (14) dotée d'un élément porteur de développateur (17) qui porte un développateur destiné à développer une image électrostatique formée sur le corps photosensible (1).

13. Cartouche de traitement selon la revendication 12, dans laquelle
le corps de bâti (14) comporte une ouverture (14c) à travers laquelle peut passer de la lumière destinée à exposer le corps photosensible (1),
la cartouche de développement (14) comprend en outre une partie de réception de développateur (18) comportant une chambre de logement (18a) qui loge un développateur, et une pluralité d'évents permettant une ventilation entre l'intérieur et l'extérieur de la chambre de logement (18a), et
une taille de trou de l'évent au niveau d'une position en regard du corps de bâti (14), parmi la pluralité d'évents, est supérieure à une taille de trou de l'évent au niveau d'une position exposée par le biais de l'ouverture (14c) .

14. Appareil de formation d'image (100) formant une image sur un matériau d'enregistrement, dans lequel
l'une ou l'autre de la cartouche (7) selon l'une quelconque des revendications 1 à 11 et de la cartouche de traitement selon la revendication 12 ou 13 est configurée en une pluralité pour pouvoir être montée sur un corps principal d'appareil et en être démontée.
